# EUROPÄISCHE PATENTANMELDUNG

(11) **EP 1 008 499 A2**
(43) Veröffentlichungstag der Anmeldung: **14.06.2000**
(21) Anmeldenummer: 99123959.1
(22) Anmeldetag: 06.12.1999
(51) Int. Cl.: B60R 22/34, B60R 22/28

(54) **Gurtaufroller für einen Fahrzeug-Sicherheitsgurt**

(30) Priorität: 07.12.1998 DE 29821801 U
(71) Anmelder: TRW Occupant Restraint Systems GmbH & Co. KG, 73553 Alfdorf (DE)
(72) Erfinder: Huber, Andreas, 75368 Durlangen (DE)
(74) Vertreter: Sties, Jochen, Dipl.-Ing.

(57) **Zusammenfassung**

Ein Gurtaufroller für einen Fahrzeug-Sicherheitsgurt (14), mit einer Gurtspule (12), mindestens einer Sperrverzahnung (20, 22), in die eine Sperrklinke (16) eingesteuert werden kann, mindestens einem Kraftbegrenzer (28, 32, 34; 60), der eine Drehung der Gurtspule (12) in der Richtung des Abwickelns des Gurtbandes (14) ermöglichen kann, und einer schaltbaren Kupplung (36), mittels der die Kennlinie von Abzugskraft des Gurtbandes über abgezogenem Gurtband geändert werden kann, ist dadurch gekennzeichnet, daß der Kraftbegrenzer (28, 32, 34) bei betätigter Kupplung (36) deaktiviert ist.

## Beschreibung

Die Erfindung betrifft einen Gurtaufroller für einen Fahrzeug-Sicherheitsgurt, mit einer Gurtspule, mindestens einer Sperrverzahnung, in die eine Sperrklinke eingesteuert werden kann, mindestens einem Kraftbegrenzer, der eine Drehung der Gurtspule in der Richtung des Abwickelns des Gurtbandes ermöglichen kann, und einer schaltbaren Kupplung, mittels der die Kennlinie von Abzugskraft des Gurtbandes über abgezogenem Gurtband geändert werden kann.

Die Kraftbegrenzungsvorrichtung dient dazu, bei an sich blockierter Gurtspule zu ermöglichen, daß eine gewisse Menge Gurtband von der Gurtspule abgezogen werden kann. Auf diese Weise wird ein zusätzlicher Weg für die Verzögerung eines Fahrzeuginsassen bereitgestellt, wodurch die maximal im Gurtband wirkende Zugkraft auf ein Maß begrenzt werden kann, bei dem es zu keinen Verletzungen des Fahrzeuginsassen kommt. Die schaltbare Kupplung dient dazu, die Kennlinie von Gurtbandabzugskraft über abgezogenem Gurtband an die jeweiligen Verhältnisse anzupassen. Beispielsweise ist es bei einem schweren Fahrzeuginsassen wünschenswert, daß zum Gurthandabzug eine vergleichsweise hohe Kraft erforderlich ist, während bei einem leichten Fahrzeuginsassen der Gurtbandabzug bereits bei einer geringeren Zugkraft möglich sein muß, damit der Kraftbegrenzungseffekt eintritt und Verletzungen des Fahrzeuginsassen verhindert werden. Zu diesem Zweck sind bisher Gurtaufroller bekannt, bei denen als Kraftbegrenzer ein Torsionsstab verwendet wird, der aus mehreren Einzelteilen besteht. Die Kupplung ermöglicht es, die einzelnen Teile des Torsionsstabes parallelzuschalten, so daß die Kennlinie von Gurtbandabzugskraft über abgezogenem Gurtband geändert werden kann. Unabhängig von dem jeweiligen Schaltzustand der Kupplung ist jedoch in jedem Fall ein Teil des Kraftbegrenzers wirksam.

Im Gegensatz dazu schafft die Erfindung einen Gurtaufroller mit einem Kraftbegrenzer, bei dem dieser Kraftbegrenzer vollständig abgeschaltet werden kann. Dies eröffnet größere Freiheiten hinsichtlich der Kennlinie von Gurtbandabzugskraft über abgezogenem Gurtband. Gemäß der Erfindung ist bei einem Gurtaufroller der eingangs genannten Art vorgesehen, daß der Kraftbegrenzer bei betätigter Kupplung deaktiviert ist. Auf diese Weise sind verschiedene Konstruktionen möglich.

Wenn nur ein einziger Kraftbegrenzer vorhanden ist, der bei betätigter Kupplung deaktiviert ist, ist vorgesehen, daß die Sperrverzahnung an einer Sperrscheibe ausgebildet ist, die bei betätigter Kupplung drehfest mit der Gurtspule verbunden ist. Bei dieser Gestaltung wirkt der Gurtaufroller bei betätigter Kupplung wie ein herkömmlicher Gurtaufroller ohne Kraftbegrenzer; die Gurtspule ist also mittels der Sperrverzahnung blockiert, und ein Abzug des Gurtbandes von der Gurtspule ist nicht möglich. Diese Betriebsart kann insbesondere nach einem ersten Aufprall des Fahrzeugs verwendet werden. Bei dem sogenannten Primäraufprall des Fahrzeugs wird die Rückhaltewirkung für den Fahrzeuginsassen üblicherweise sowohl von dem Gurtaufroller mit aktivem Kraftbegrenzer als auch von einem Gassack bereit gestellt. Der Kraftbegrenzer ist so auf den Gassack abgestimmt, daß eine möglichst gleichmäßige und schonende Rückhaltewirkung erzielt wird. Kommt es allerdings zu einem Sekundäraufprall, ist der Gassack nicht mehr wirksam. Wäre in diesem Fall noch der Kraftbegrenzer des Gurtaufrollers aktiv, wäre eine übermäßig große Vorverlagerung des Fahrzeuginsassen möglich, die schließlich zu einem Kontakt mit Teilen des Fahrzeuginnenraums führen könnte. Aus diesem Grund ist es wünschenswert, daß der Gurtaufroller bei einem Sekundäraufprall in herkömmlicher Weise ohne Kraftbegrenzer arbeitet, also die Gurtspule so blockiert ist, daß das Gurtband nicht weiter von ihr abgezogen werden kann. Es ist grundsätzlich denkbar, die Kupplung mechanisch zu schalten, so daß der Kraftbegrenzer in jedem Fall deaktiviert ist und die Gurtspule vollständig blockiert werden kann. Diese Möglichkeit ist relevant für den Fall, daß der in einem Fahrzeug vorhandene Gassack von vornherein für jeden Fall deaktiviert wird, wenn z. B. der Fahrzeuginsasse in einem solchen Gassack ein unerwünschtes Gefährdungspotential sieht. Da dann der Gassack zum Zurückhalten des Fahrzeuginsassen nicht mehr bereitsteht, muß die Vorverlagerung des Fahrzeuginsassen begrenzt werden, so daß der Kraftbegrenzer nicht aktiv sein darf.

Die erfindungsgemäße Konstruktion ermöglicht auch, zwei Kraftbegrenzer vorzusehen, die im Ausgangszustand bei nicht betätigter Kupplung parallelgeschaltet sind und von denen einer durch Betätigen der Kupplung deaktiviert wird. Im Ausgangszustand ist die zum Abziehen vom Gurtband von der Gurtspule erforderliche Kraft bestimmt durch die Summe der von den beiden Kraftbegrenzern bereitgestellten Haltemomente. Wenn dagegen die Kupplung betätigt wurde, ergibt sich die Kennlinie aus der von dem verbleibenden Kraftbegrenzer bereitgestellten Haltekraft. Die Kupplung kann beispielsweise in Abhängigkeit vom Gewicht des entsprechenden Fahrzeuginsassen betätigt werden. Wenn eine geeignete Sensorik beispielsweise mittels Druckaufnehmern im Fahrzeugsitz erfaßt, daß der entsprechende Fahrzeuginsasse ein geringes Gewicht hat, wird die Kupplung betätigt, so daß nur ein einziger Kraftbegrenzer aktiv ist. In diesem Fall ist ein Gurtbandabzug von der Gurtspule bereits bei geringeren Gurtbandkräften möglich.

Gemäß einer bevorzugten Ausführungsform der Erfindung ist vorgesehen, daß die Kupplung einen Mitnehmer aufweist, der mit Mitnehmerlamellen versehen ist, die in eine geeignet geformte Aufnahme eines Abtriebsteils eingreifen, so daß eine formschüssige Verbindung erzielt ist, und daß ein Kolben vorgesehen ist, der in der unbetätigten Stellung die Mitnehmerlamellen unterstützt, so daß der Mitnehmer und das Abtriebsteil drehfest miteinander verbunden sind, und der in der betätigten Stellung die Mitnehmerlamellen freigibt, so daß eine Verbindung zwischen dem Mitnehmer und dem Abtriebsteil oberhalb eines bestimmten Drehmomentes gelöst ist. Diese Gestaltung führt zu einer besonders kompakten Kupplung, die in zuverlässiger Weise betätigt werden kann.

Vorzugsweise ist vorgesehen, daß der Kolben eine Druckkammer verschließt, in der eine pyrotechnische Ladung angeordnet ist, die bei Aktivierung den Kolben aus der unbetätigten Stellung in die betätigte Stellung verstellt. Auf diese Weise ist gewährleistet, daß die Kupplung unter allen Umständen zuverlässig in die betätigte Stellung überführt werden kann.

Als Kraftbegrenzer kommen grundsätzlich alle Arten von Kraftbegrenzern in Frage, beispielsweise ein Torsionsstab oder eine Bandauszugsvorrichtung, bei der ein in einer Schikane geführtes Stahlband aus dieser herausgezogen werden kann, wodurch die Haltekraft aufgrund der Reibung zwischen dem Stahlband und der Schikane erzeugt wird.

Vorteilhafte Ausgestaltungen der Erfindung ergeben sich aus den Unteransprüchen.

Die Erfindung wird nachfolgend unter Bezugnahme auf verschiedene Ausführungsformen beschrieben, die in den beigefügten Zeichnungen dargestellt sind. In diesen zeigen:
- Fig. 1 in einem schematischen Querschnitt einen erfindungsgemäßen Gurtaufroller gemäß einer ersten Ausführungsform;
- Fig. 2 in einer schematischen Schnittansicht den Kraftbegrenzungsmechanismus bei einem erfindungsgemäßen Gurtaufroller gemäß einer zweiten Ausführungsform;
- Fig. 3 in einer perspektivischen Schnittansicht einen Teil eines erfindungsgemäßen Gurtaufrollers gemäß der zweiten Ausführungsform;
- Fig. 4 in einer perspektivischen Explosionsansicht die Bauteile der im Gurtaufroller von Fig. 1 enthaltenen Kupplung;
- Fig. 5 in einer vergrößerten abgebrochenen Ansicht ein Teil der Kupplung von Fig. 2;
- Fig. 6 ein Diagramm von Gurtbandabzugskraft über abgezogenem Gurtband für den Gurtaufroller gemäß der ersten Ausführungsform, und
- Fig. 7 ein Diagramm von Gurtbandabzugskraft über abgezogenem Gurtband für den Gurtaufroller gemäß der zweiten Ausführungsform.

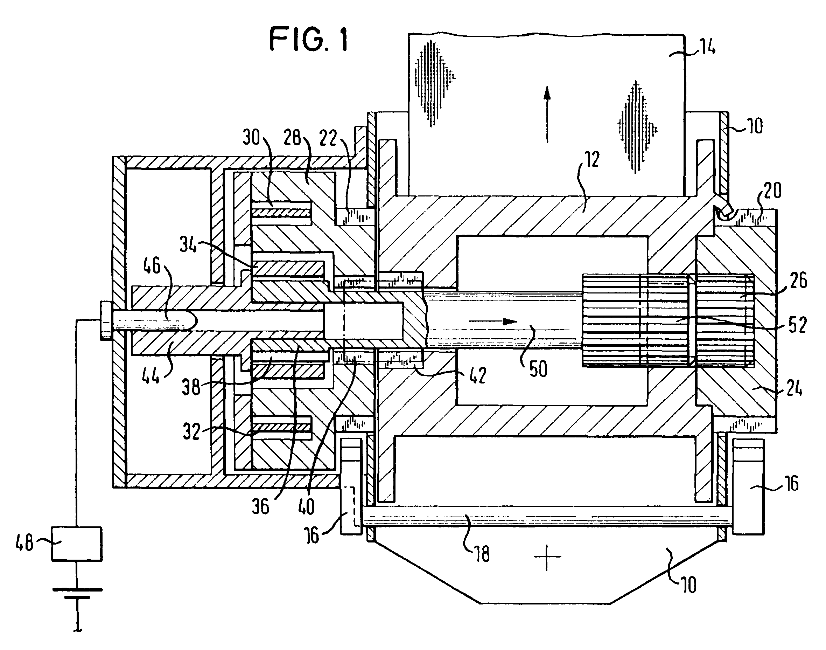

In Fig. 1 ist ein Gurtaufroller gemäß einer ersten Ausführungsform der Erfindung gezeigt. Er enthält eine in einem Rahmen 10 drehbar gelagerte Gurtspule 12, auf die ein Gurtband 14 aufgewickelt ist.

Im Rahmen 10 sind schwenkbar zwei Sperrklinken 16 gelagert, die drehfest miteinander durch eine Achse 18 verbunden sind. Die beiden Sperrklinken 16 werden in an sich bekannter Weise durch einen geeigneten Auslösemechanismus aktiviert, der sie in fahrzeug- oder gurtbandsensitiver Weise in Sperrverzahnungen 20, 22 einsteuern kann. Die Sperrverzahnung 20 ist an einer Sperrscheibe 24 ausgebildet, die an der bezüglich Fig. 1 rechten Seite der Gurtspule 12 drehbar gelagert und mit einer Keilverzahnung 26 versehen ist.

Die Sperrverzahnung 22 ist auf einem Gehäuse 28 einer Kraftbegrenzungsvorrichtung ausgebildet, die an dem bezüglich Fig. 1 linken Ende der Gurtspule 12 angeordnet ist. Diese Kraftbegrenzungsvorrichtung weist im Gehäuse 28 einen Kanal 30 auf, in welchem ein Stahlband 32 angeordnet ist. Das Stahlband 32 ist an einem Ende mit einer Nabe 34 verbunden, die konzentrisch mit dem Gehäuse 28 angeordnet ist. Vereinfacht ausgedrückt wird bei einer Drehung der Nabe 34 relativ zum Gehäuse 28 das Stahlband 32 aus dem Kanal 30 unter Überwindung einer Reibungskraft herausgezogen. Diese Reibungskraft kann durch geeignete Ausgestaltung des Kanals, durch die Krümmung von in diesem Kanal angeordneten Schikanen sowie durch die Gestaltung des Stahlbandes in der gewünschten Weise eingestellt werden. Hinsichtlich Details dieser Kraftbegrenzungsvorrichtung wird auf das deutsche Gebrauchsmuster 298 16 280 verwiesen, auf das hier ausdrücklich Bezug genommen wird.

Im Inneren der Nabe 34 ist ein Kolben 36 angeordnet, der auf seiner Außenseite mit einer Keilverzahnung 38 versehen ist. Die Keilverzahnung 38 greift drehfest in eine komplementäre Keilverzahnung der Nabe 34 ein. Ferner sind das Gehäuse 28 sowie die Gurtspule 12 mit zur Keilverzahnung 38 komplementären Keilverzahnungen 40, 42 versehen.

Der Kolben 36 weist einen hohlen Innenraum auf, in den ein Druckkammerteil 44 hineinragt. Im Inneren des Druckkammerteils 44 ist eine pyrotechnische Ladung 46 angeordnet, die mittels einer Sensorik- und Zündeinheit 48 gezündet werden kann.

Auf der von der pyrotechnischen Ladung 46 abgewandten Seite ist der Kolben 36 mit einem Betätigungsfortsatz 50 versehen, der an seinem freien Ende mit einer Keilverzahnung 52 versehen ist. Die Keilverzahnung 52 ist zur Keilverzahnung 26 der Sperrscheibe 24 komplementär und greift außerdem in eine komplementäre Keilverzahnung am rechten Ende der Gurtspule ein.

In Fig. 1 ist die Ruhe- und Ausgangsstellung des Kolbens 36 und des Betätigungsfortsatzes 50 gezeigt. In dieser Ruhestellung greift die Keilverzahnung 38 des Kolbens 36 in die komplementäre Keilverzahnung der Nabe 34 ein, und die Keilverzahnung 52 des Betätigungsfortsatzes 50 greift in die Keilverzahnung am rechten Ende der Gurtspule 12 ein. Die Keilverzahnung 38 des Kolbens 36 greift jedoch nicht in die Keilverzahnungen 40 und 42 des Gehäuses 28 und des linken Endes der Gurtspule ein, und die Keilverzahnung 52 greift nicht in die Keilverzahnung 26 der Sperrscheibe 24 ein.

Wenn die Sperrklinken 16 aktiviert werden, ergibt sich die folgende Funktionsweise: Die Sperrverzahnungen 20, 22 werden von den Sperrklinken 16 blockiert. Da die Sperrscheibe 24 jedoch frei drehbar relativ zur Gurtspule ist, kann auf der rechten Seite keine Kraft auf die Gurtspule übertragen werden. Wenn am Gurtband 14 in der durch den Pfeil angegebenen Richtung gezogen wird, wird über die Keilverzahnung 52 und den Betätigungsfortsatz 50 ein entsprechendes Drehmoment auf den Kolben 36 übertragen, das dann wiederum über die Keilverzahnung 38 auf die Nabe 34 übertragen wird. Die Nabe 34 ist über das Stahlband 32 mit dem Gehäuse 28 verbunden, das über die Sperrverzahnung 22 und die Sperrklinke 16 drehfest gehalten wird. Erst wenn das über die Gurtspule auf die Nabe 34 übertragene Drehmoment einen Wert übersteigt, bei dem die Haltekraft des Stahlbandes überschritten wird, kommt es zu einer Relativdrehung der Nabe 34 relativ zum Gehäuse 28, so daß Gurtband von der Gurtspule 12 abgezogen werden kann. Es ist also eine Kraftbegrenzungsfunktion verwirklicht.

Eine andere Funktionsweise ergibt sich, wenn die Kupplung betätigt wird. Zu diesem Zweck wird die pyrotechnische Ladung 46 gezündet. Dann entsteht im Druckkammerteil 44 ein solcher Druck, daß der Kolben 36 aus der in Fig. 1 gezeigten Lage nach rechts bis in eine Stellung verstellt wird, in der die Keilverzahnung 38 in die Keilverzahnungen 40 und 42 und die Keilverzahnung 52 in die Keilverzahnung 26 eingreift. Diese Lage des Kolbens ist in Fig. 1 strichpunktiert gezeigt. In dieser betätigten Stellung ergibt sich die folgende Funktionsweise: Wenn über das Gurtband 14 eine Kraft auf die Gurtspule 12 ausgeübt wird, wird das resultierende Drehmoment von der rechten Seite der Gurtspule in die Keilverzahnung 52 und von dieser direkt in die Keilverzahnung 26 der Sperrscheibe 24 eingeleitet. Die Sperrscheibe 24 ist aber mittels der Sperrklinke 16 blockiert. Die Gurtspule ist also umittelbar blockiert, ohne daß ein Kraftbegrenzer aktiv werden kann.

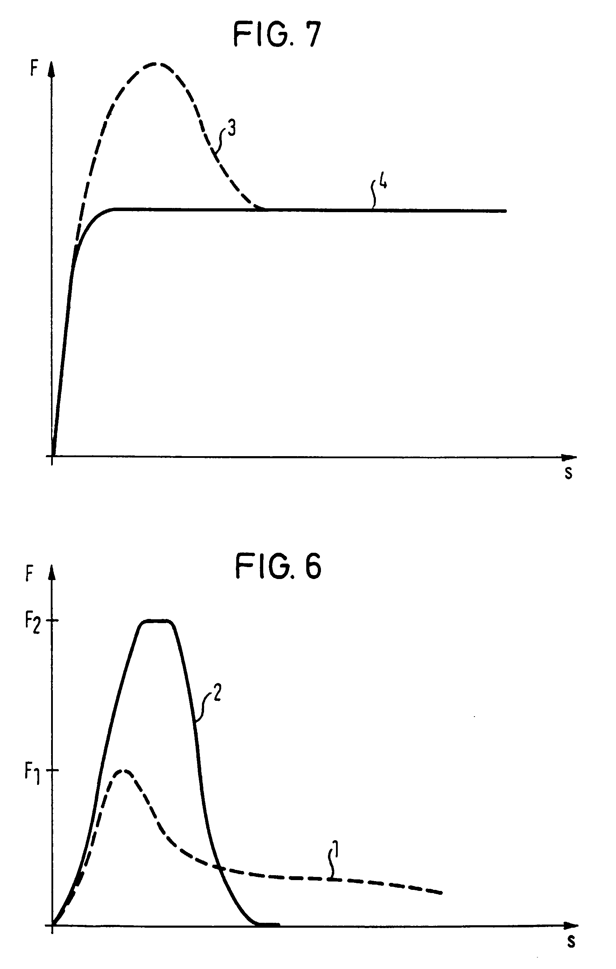

In Fig. 6 sind die sich ergebenden Kennlinien von Gurtbandabzugskraft F über abgezogenem Gurtband s gezeigt. In der Stellung mit unbetätigter Kupplung, in der der Kraftbegrenzer aktiv ist, ergibt sich die Kurve 1, in der die maximal wirkende Gurtbandkraft auf einen Wert F₁ begrenzt ist. Sobald dieser Wert an Gurtbandabzugskraft erreicht ist, wird die Haltekraft des Stahlbandes 32 überwunden, so daß es zu einer Relativdrehung zwischen dem Mitnehmer 34 und dem Gehäuse 28 und folglich zu einer Freigabe von Gurtband kommt. Wenn dagegen die Kupplung betätigt ist, ergibt sich die Kennlinie 2, bei der die im Gurtband wirkenden Kräfte einen sehr viel höheren Wert erreichen können. Dieser Wert ist letztendlich von der Bruchfestigkeit des Gurtaufrollers vorgegeben.

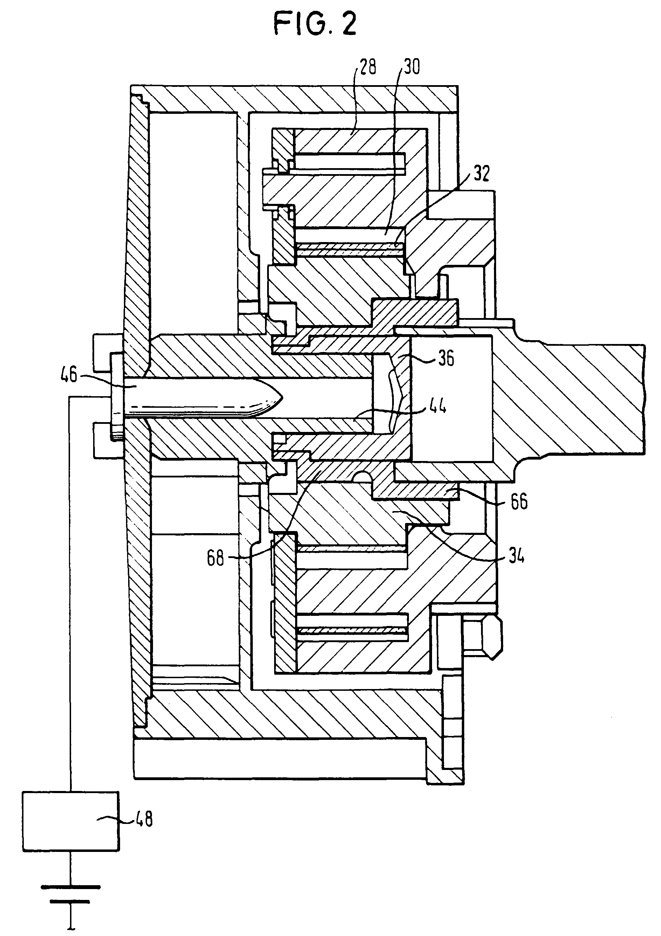

In den Fig. 2 bis 5 sind schematisch die wesentlichen Bestandteile eines Gurtaufrollers gemäß einer zweiten Ausführungsform gezeigt. Auch hier wird eine mit einer pyrotechnischen Ladung 46 und einem Kolben 36 versehene Kupplung verwendet.

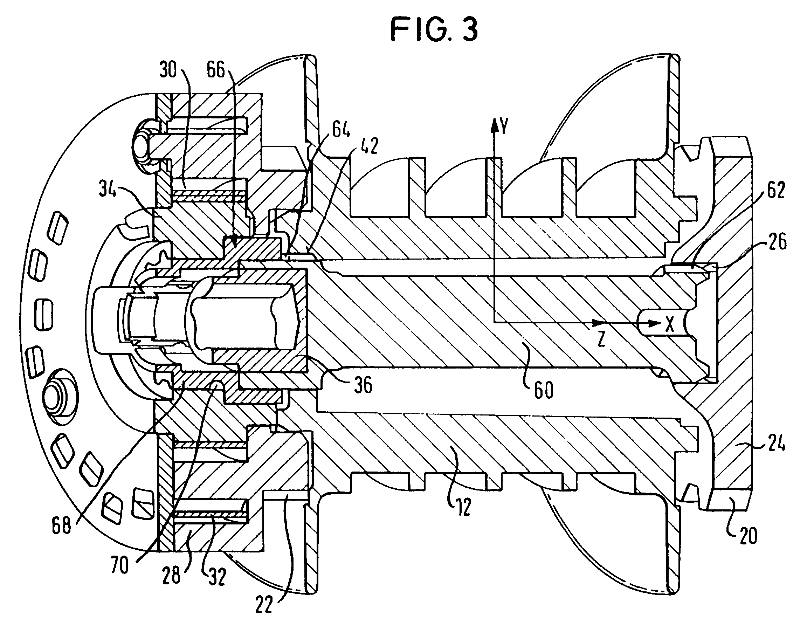

Der Gurtaufroller gemäß der zweiten Ausführungsform unterscheidet sich von demjenigen der ersten Ausführungsform im wesentlichen dadurch, daß im Inneren der Gurtspule 12 ein Torsionsstab 60 angeordnet ist. An dem bezüglich Fig. 3 rechten Ende ist die Sperrscheibe 24 mit der Sperrverzahnung 20 angebracht, wobei die Sperrscheibe 24 mit einer Keilverzahnung 26 versehen ist, die drehfest mit einer Keilverzahnung 62 des Torsionsstabes verbunden ist.

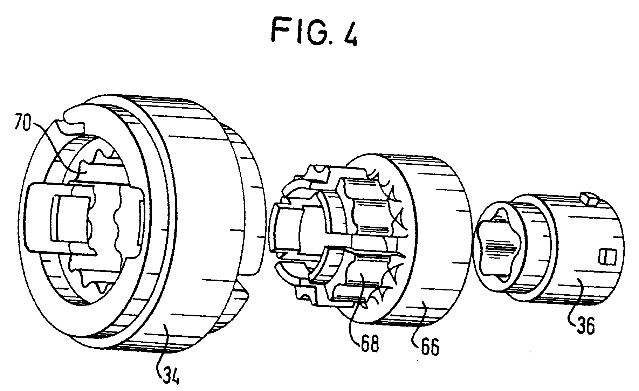

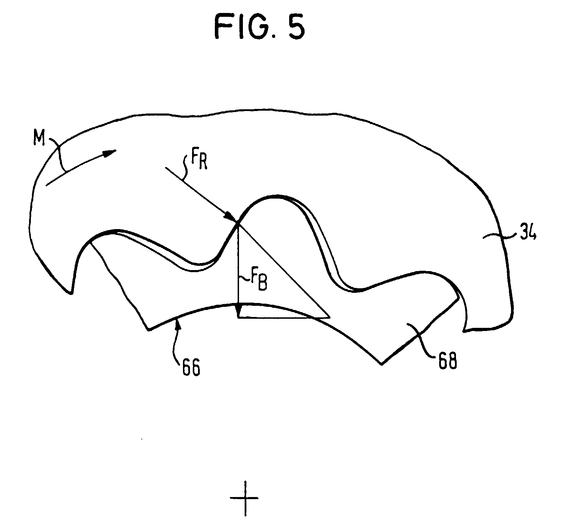

Das gegenüberliegende Ende ist mit einer Keilverzahnung 64 versehen, die drehfest mit der Keilverzahnung 42 der Gurtspule 12 verbunden ist. Auf der Keilverzahnung 42 ist ferner drehfest ein Mitnehmer 66 (siehe auch die Fig. 4 und 5) angebracht, der mit Mitnehmerlamellen 68 versehen ist. Die Mitnehmerlamellen 68 weisen eine solche Außenkontur auf, daß sie zusammengenommen ein Keilwellenprofil bilden. Dieses Keilwellenprofil greift in eine komplementäre Keilwellenverzahnung 70 ein, die im Inneren der Nabe 34 ausgebildet ist. Im Inneren des Mitnehmers 66 ist der von der ersten Ausführungsform bekannte Kolben 36 angebracht, der mit seiner Außenfläche an der Innenfläche der Mitnehmerlaschen 68 anliegt.

Die Ausgangsstellung mit unbetätigter Kupplung ist in Fig. 2 gezeigt. In dieser ergibt sich die folgende Funktionsweise: Wenn die Sperrklinken 16 in die Verzahnungen 20, 22 eingreifen, wird zum einen über die Sperrscheibe 24 das rechte Ende des Torsionsstabes 60 drehfest gehalten und zum anderen über die Sperrverzahnung 22 das Gehäuse 28 des aus der Nabe 34, dem Stahlband 32 und dem Gehäuse 28 bestehenden Kraftbegrenzers. Wenn die Gurtspule 12 über das Gurtband 14 in der Gurtband-Abwickelrichtung beaufschlagt wird, wird das resultierende Drehmoment über die Keilverzahnung 42 der Gurtspule 12 und die Keilverzahnung 64 des Torsionsstabes 60 sowohl in den Torsionsstab 60 als auch den Mitnehmer 66 eingeleitet. Die Gurtspule kann dann in der Gurtband-Abwickelrichtung gedreht werden, wenn das auf sie einwirkende Drehmoment größer ist als das vom Torsionsstab 60 bereitgestellte Haltedrehmoment und das von dem Stahlband 32 zusammen mit der Nabe 34 und dem Gehäuse 28 bereitgestellte Haltedrehmoment. Die beiden Kraftbegrenzer sind also parallelgeschaltet.

Zur Betätigung der Kupplung wird die pyrotechnische Ladung 46 gezündet. Der dabei entstehende Druck bewegt den Kolben 36 aus der in Fig. 2 gezeigten, linken Stellung in die in Fig. 3 gezeigte rechte Stellung. In diesem Zustand ist die Außenfläche des Kolbens 36 nicht mehr in der Lage, die Mitnehmerlamellen 68 auf der Innenseite zu unterstützen.

Wenn in diesem Zustand mit betätigter Kupplung ein Drehmoment auf die Gurtspule ausgeübt wird, wird dieses in gleicher Weise wie bei unbetätigter Kupplung sowohl in den Torsionsstab 60 als auch den Mitnehmer 66 eingeleitet. Da nunmehr aber die Mitnehmerlamellen 68 nicht mehr unterstützt werden, werden diese beim Versuch, die Nabe 34 zu drehen, durch die resultierende Kraft F_{R} (siehe Fig. 5) und einer sich daraus ergebenden Biegekraft F_{B} nach innen gedrückt. Da am Fuß der Mitnehmerlamellen eine Sollbruchstelle 70 ausgebildet ist, brechen die Mitnehmerlamellen ab, und es wird kein Drehmoment auf die Nabe 34 übertragen. Somit wird das einer Drehung der Gurtspule 12 entgegenwirkende Drehmoment ausschließlich vom Torsionsstab 60 bereitgestellt; der zweite Kraftbegrenzer ist deaktiviert.

In Fig. 7 sind die sich ergebenden Kennlinien von Gurtbandabzugskraft F über abgezogenem Gurtband s aufgetragen. In der Stellung mit unbetätigter Kupplung, in der die beiden Kraftbegrenzer parallelgeschaltet sind, ergibt sich die Kennlinie 3, in der die von jeder einzelnen Kraftbegrenzungsvorrichtung bereitgestellte Haltekraft addiert wird. In der Stellung mit betätigter Kupplung ergibt sich die Kurve 4, die ausschließlich vom Torsionsstab 60 bereitgestellten Haltekraft bestimmt wird.

## Patentansprüche

1. Gurtaufroller für einen Fahrzeug-Sicherheitsgurt (14), mit einer Gurtspule (12), mindestens einer Sperrverzahnung (20, 22), in die eine Sperrklinke (16) eingesteuert werden kann, mindestens einem Kraftbegrenzer (28, 32, 34; 60), der eine Drehung der Gurtspule (12) in der Richtung des Abwickelns des Gurtbandes (14) ermöglichen kann, und einer schaltbaren Kupplung (36), mittels der die Kennlinie von Abzugskraft des Gurtbandes über abgezogenem Gurtband geändert werden kann,
dadurch gekennzeichnet, daß der Kraftbegrenzer (28, 32, 34) bei betätigter Kupplung (36) deaktiviert ist.

2. Gurtaufroller nach Anspruch 1, dadurch gekennzeichnet, daß die Kupplung einen Mitnehmer (66) aufweist, der mit Mitnehmerlamellen (68) versehen ist, die in eine geeignet geformte Aufnahme eines Abtriebsteils (34) eingreifen, so daß eine formschlüssige Verbindung erzielt ist, und daß ein Kolben (36) vorgesehen ist, der in der unbetätigten Stellung die Mitnehmerlamellen (68) unterstützt, so daß der Mitnehmer (66) und das Abtriebsteil (34) drehfest miteinander verbunden sind, und der in der betätigten Stellung die Mitnehmerlamellen (68) freigibt, so daß die Verbindung zwischen dem Mitnehmer (66) und dem Abtriebsteil (34) oberhalb eines bestimmten Drehmomentes gelöst ist.

3. Gurtaufroller nach Anspruch 2, dadurch gekennzeichnet, daß der Kolben (36) eine Druckkammer verschließt, in der eine pyrotechnische Ladung (46) angeordnet ist, die bei Aktivierung den Kolben (36) aus der unbetätigten Stellung in die betätigte Stellung verstellt.

4. Gurtaufroller nach einem der vorhergehenden Ansprüche, dadurch gekennzeichnet, daß ein einziger Kraftbegrenzer (28, 32, 34) vorhanden ist, der bei betätigter Kupplung (36) deaktiviert ist, und daß die Sperrverzahnung (20) an einer Sperrscheibe (24) ausgebildet ist, die bei betätigter Kupplung (36) drehfest mit der Gurtspule (12) verbunden ist.

5. Gurtaufroller nach Anspruch 4, dadurch gekennzeichnet, daß der einzige Kraftbegrenzer eine Bandauszugsvorrichtung (28, 32, 34) ist.

6. Gurtaufroller nach Anspruch 4 oder Anspruch 5, dadurch gekennzeichnet, daß mit dem Kolben (36) ein Betätigungsfortsatz (50) verbunden ist, der mit einer Verzahnung (52) versehen ist, mittels der die Sperrscheibe (24) drehfest mit der Gurtspule (12) verbunden werden kann.

7. Gurtaufroller nach einem der Ansprüche 1 bis 3, dadurch gekennzeichnet, daß zwei Kraftbegrenzer (28, 32, 34; 60) vorhanden sind, von denen einer bei betätigter Kupplung (36) deaktiviert ist.

8. Gurtaufroller nach Anspruch 7, dadurch gekennzeichnet, daß der eine Kraftbegrenzer ein Torsionsstab (60) und der andere eine Bandauszugsvorrichtung (28, 32, 34) ist.

9. Gurtaufroller nach Anspruch 8, dadurch gekennzeichnet, daß bei betätigter Kupplung (36) die Bandauszugsvorrichtung (28, 32, 34) deaktiviert ist.
